# EUROPEAN PATENT APPLICATION

(11) **EP 4 597 334 A1**
(43) Date of publication of application: **06.08.2025**
(21) Application number: 25152777.6
(22) Date of filing: 20.01.2025
(51) Int. Cl.: G06F 16/27

(54) **WRITEABLE PARTITIONS WITHIN READ-ONLY REPLICATED RECORDS**

(30) Priority: 03.02.2024 IN 202441007418; 19.04.2024 US 202418640326
(71) Applicant: Nutanix, Inc., San Jose, California 95110 (US)
(72) Inventor: BORAH, Swagat, San Jose, 95110 (US); BHATIA, Sumit, San Jose, 95110 (US); KOMATINENI, Pradhyumna, San Jose, 95110 (US); RAI, Aryan, San Jose, 95110 (US); REDDY, Chitti Ankith, San Jose, 95110 (US); SHEKHAWAT, Devendra Singh, San Jose, 95110 (US)
(74) Representative: Mathys & Squire

(57) **Abstract**

Techniques for using writeable partitions with read-only replicated records include one or more non-transitory computer-readable media storing program instructions that, when executed by one or more processors of an authorization server, cause the one or more processors to perform a method including receiving a replica of a portion of a database, storing the replica of the portion of the database in a read-only partition, adding a field to the portion of the database in a writeable partition, and writing data to the added field.

## Description

### CROSS-REFERENCE TO RELATED APPLICATIONS

This application claims the benefit to India Provisional Application No. 202441007418, filed February 3, 2024, and entitled "WRITEABLE PARTITIONS WITHIN READ-ONLY REPLICATED RECORDS," which is incorporated by reference herein.

### BACKGROUND

### Field of the Various Embodiments

Embodiments of the present invention relate generally to database management technologies, and more specifically, writeable partitions within read-only replicated records.

### Description of the Related Art

In database systems, it is common to replicate portions of a database, such as tables, documents, or key-value pairs, and fields therein. Replication involves creating copies of database portions across different servers, clusters, or locations. Replicated versions of database portions are typically designated as read-only, which becomes problematic for clients who need to append additional, context-specific data to the replicas. The inability to directly augment replicated database portions hinders the full utilization of the data and compromises operational flexibility.

Due to the read-only nature of the replicated tables, clients are often forced into suboptimal and inefficient methods to enrich the replicated data. The conventional solution involves the creation of new database structures that act as repositories for the new or derived data. While the creation of new structures such as key-value pairs, tables, or documents, can offer a temporary fix, the creation of new structures leads to inefficiencies in managing and accessing the new structures. The new structures create storage overhead due to the need to record foreign references in the new structures. In addition, querying of the new structures along with the replicated data involves the use of compute-intensive join operations. Performing joins across tables is an expensive database operation in many SQL databases, and certain NoSQL databases do not even support join operations across tables. Resource and time requirements for performing joins can grow polynomially as the size of a database table increases. In addition, life cycle management becomes more complex to identify and delete records in the new structures associated with records that are being deleted from the replicated database portions.

As the foregoing indicates, what is needed in the art is methods and systems that allow for the direct augmentation and manipulation of replicated database portions.

### SUMMARY

The disclosed embodiments describe techniques for enabling end users or clients to directly append or integrate additional data into replicated database tables. The techniques include allowing the end user or client to create writable partitions within an otherwise read-only replicated database table.

In various embodiments, a database table comprises one or more first columns in a read-only partition and one or more second columns in a writeable partition.

In various embodiments, one or more non-transitory computer-readable media storing program instructions that, when executed by one or more processors, cause the one or more processors to perform a method comprising receiving a replica of a portion of a database; storing the replica of the portion of the database in a read-only partition; adding a field to the portion of the database in a writeable partition; and writing data to the added field.

Further embodiments provide, among other things, methods and systems for implementing one or more aspects of the disclosed techniques.

At least one technical advantage of the disclosed techniques relative to prior art is that, with the disclosed techniques, clients are enabled to enhance and manipulate replicated database portions directly, thereby reducing the need for additional data structures, complex join operations, and complex life cycle management techniques. The use of the enhanced database portions reduces the storage and computational resources required to manage and access databases with both replicated and derived data relative to conventional approaches. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIGs. 1A-1D are block diagrams illustrating virtualization system architectures configured to implement one or more aspects of the present embodiments; and
FIG. 2 is a block diagram illustrating a computing system configured to implement one or more aspects of the present embodiments.
FIG. 3 is a block diagram illustrating example database portions according to one or more aspects of the present embodiments.
FIG. 4 is a block diagram illustrating example database portions according to one or more aspects of the present embodiments.
FIG. 5 is a flow diagram illustrating an example method according to one or more aspects of the present embodiments.

### DETAILED DESCRIPTION

In the following description, various concepts and examples are disclosed that provide more effective techniques for accessing business data using executable code included in authorization identifiers. The numerous specific details set forth will provide artisans with a more thorough understanding of the various embodiments. However, it will be apparent to one skilled in the art that the inventive concepts can be practiced without one or more of these specific details.

### Exemplary Virtualization System Architectures

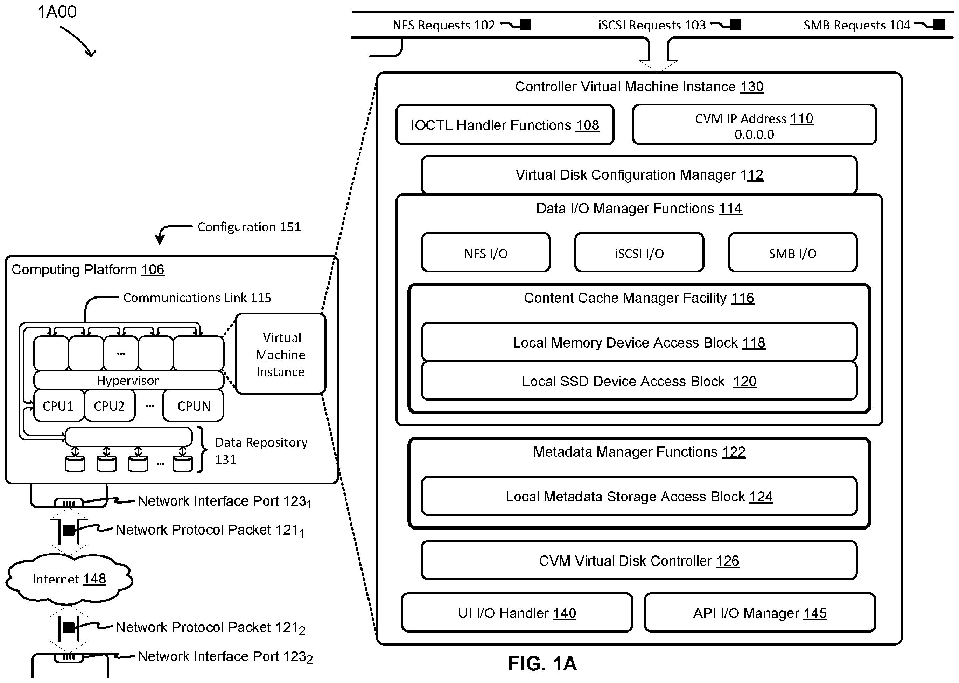

According to some embodiments, all or portions of any of the disclosed techniques can be partitioned into one or more modules and instances within, or as, or in conjunction with a virtualized controller in a virtual computing environment. Some example instances within various virtual computing environments are shown and discussed in further detail in FIGs. 1A-1D. Consistent with these embodiments, a virtualized controller includes a collection of software instructions that serve to abstract details of underlying hardware or software components from one or more higher-level processing entities. In some embodiments, a virtualized controller can be implemented as a virtual machine, as an executable container, or within a layer (e.q., such as a layer in a hypervisor). Consistent with these embodiments, distributed systems include collections of interconnected components that are designed for, or dedicated to, storage operations as well as being designed for, or dedicated to, computing and/or networking operations.

In some embodiments, interconnected components in a distributed system can operate cooperatively to achieve a particular objective such as to provide high-performance computing, high-performance networking capabilities, and/or high-performance storage and/or high-capacity storage capabilities. For example, a first set of components of a distributed computing system can coordinate to efficiently use a set of computational or compute resources, while a second set of components of the same distributed computing system can coordinate to efficiently use the same or a different set of data storage facilities.

In some embodiments, a hyperconverged system coordinates the efficient use of compute and storage resources by and between the components of the distributed system. Adding a hyperconverged unit to a hyperconverged system expands the system in multiple dimensions. As an example, adding a hyperconverged unit to a hyperconverged system can expand the system in the dimension of storage capacity while concurrently expanding the system in the dimension of computing capacity and also in the dimension of networking bandwidth. Components of any of the foregoing distributed systems can comprise physically and/or logically distributed autonomous entities.

In some embodiments, physical and/or logical collections of such autonomous entities can sometimes be referred to as nodes. In some hyperconverged systems, compute and storage resources can be integrated into a unit of a node. Multiple nodes can be interrelated into an array of nodes, which nodes can be grouped into physical groupings (e.g., arrays) and/or into logical groupings or topologies of nodes (e.q., spoke-and-wheel topologies, rings, etc.). Some hyperconverged systems implement certain aspects of virtualization. For example, in a hypervisor-assisted virtualization environment, certain of the autonomous entities of a distributed system can be implemented as virtual machines. As another example, in some virtualization environments, autonomous entities of a distributed system can be implemented as executable containers. In some systems and/or environments, hypervisor-assisted virtualization techniques and operating system virtualization techniques are combined.

FIG. 1A is a block diagram illustrating virtualization system architecture 1A00 configured to implement one or more aspects of the present embodiments. As shown in FIG. 1A, virtualization system architecture 1A00 includes a collection of interconnected components, including a controller virtual machine (CVM) instance 130 in a configuration 151. Configuration 151 includes a computing platform 106 that supports virtual machine instances that are deployed as user virtual machines, or controller virtual machines or both. Such virtual machines interface with a hypervisor (as shown). In some examples, virtual machines can include processing of storage I/O (input/output or IO) as received from any or every source within the computing platform. An example implementation of such a virtual machine that processes storage I/O is depicted as CVM instance 130.

In this and other configurations, a CVM instance receives block I/O storage requests as network file system (NFS) requests in the form of NFS requests 102, internet small computer storage interface (iSCSI) block IO requests in the form of iSCSI requests 103, Samba file system (SMB) requests in the form of SMB requests 104, and/or the like. The CVM instance publishes and responds to an internet protocol (IP) address (e.q., CVM IP address 110). Various forms of input and output can be handled by one or more IO control handler functions (e.q., IOCTL handler functions 108) that interface to other functions such as data IO manager functions 114 and/or metadata manager functions 122. As shown, the data IO manager functions can include communication with virtual disk configuration manager 112 and/or can include direct or indirect communication with any of various block IO functions (e.q., NFS IO, iSCSI IO, SMB IO, etc.).

In addition to block IO functions, configuration 151 supports IO of any form (e.q., block IO, streaming IO, packet-based IO, HTTP traffic, etc.) through either or both of a user interface (Ul) handler such as UI IO handler 140 and/or through any of a range of application programming interfaces (APIs), possibly through API IO manager 145.

Communications link 115 can be configured to transmit (e.g., send, receive, signal, etc.) any type of communications packets comprising any organization of data items. The data items can comprise a payload data, a destination address (e.q., a destination IP address) and a source address (e.g., a source IP address), and can include various packet processing techniques (e.g., tunneling), encodings (e.g., encryption), formatting of bit fields into fixed-length blocks or into variable length fields used to populate the payload, and/or the like. In some cases, packet characteristics include a version identifier, a packet or payload length, a traffic class, a flow label, etc. In some cases, the payload comprises a data structure that is encoded and/or formatted to fit into byte or word boundaries of the packet.

In some embodiments, hard-wired circuitry can be used in place of, or in combination with, software instructions to implement aspects of the disclosure. Thus, embodiments of the disclosure are not limited to any specific combination of hardware circuitry and/or software. In embodiments, the term "logic" shall mean any combination of software or hardware that is used to implement all or part of the disclosure.

Computing platform 106 includes one or more computer readable media that is capable of providing instructions to a data processor for execution. In some examples, each of the computer readable media can take many forms including, but not limited to, non-volatile media and volatile media. Non-volatile media includes any non-volatile storage medium, for example, solid state storage devices (SSDs) or optical or magnetic disks such as hard disk drives (HDDs) or hybrid disk drives, or random-access persistent memories (RAPMs) or optical or magnetic media drives such as paper tape or magnetic tape drives. Volatile media includes dynamic memory such as random-access memory (RAM). As shown, controller virtual machine instance 130 includes content cache manager facility 116 that accesses storage locations, possibly including local dynamic random-access memory (DRAM) (e.g., through local memory device access block 118) and/or possibly including accesses to local solid-state storage (e.q., through local SSD device access block 120).

Common forms of computer readable media include any non-transitory computer readable medium, for example, floppy disk, flexible disk, hard disk, magnetic tape, or any other magnetic medium; CD-ROM or any other optical medium; punch cards, paper tape, or any other physical medium with patterns of holes; or any RAM, PROM, EPROM, FLASH-EPROM, or any other memory chip or cartridge. Any data can be stored, for example, in any form of data repository 131, which in turn can be formatted into any one or more storage areas, and which can comprise parameterized storage accessible by a key (e.g., a filename, a table name, a block address, an offset address, etc.). Data repository 131 can store any forms of data and can comprise a storage area dedicated to storage of metadata pertaining to the stored forms of data. In some cases, metadata can be divided into portions. Such portions and/or cache copies can be stored in the storage data repository and/or in a local storage area (e.g., in local DRAM areas and/or in local SSD areas). Such local storage can be accessed using functions provided by local metadata storage access block 124. The data repository 131 can be configured using CVM virtual disk controller 126, which can in turn manage any number or any configuration of virtual disks.

Execution of a sequence of instructions to practice certain of the disclosed embodiments is performed by one or more instances of a software instruction processor, or a processing element such as a data processor, or such as a central processing unit (e.q., CPU1, CPU2, ..., CPUN). According to certain embodiments of the disclosure, two or more instances of configuration 151 can be coupled by communications link 115 (e.q., backplane, LAN, PSTN, wired or wireless network, etc.) and each instance can perform respective portions of sequences of instructions as can be required to practice embodiments of the disclosure.

The shown computing platform 106 is interconnected to the Internet 148 through one or more network interface ports (e.g., network interface port 123₁ and network interface port 123₂). Configuration 151 can be addressed through one or more network interface ports using an IP address. Any operational element within computing platform 106 can perform sending and receiving operations using any of a range of network protocols, possibly including network protocols that send and receive packets (e.q., network protocol packet 121₁ and network protocol packet 121₂).

Computing platform 106 can transmit and receive messages that can be composed of configuration data and/or any other forms of data and/or instructions organized into a data structure (e.g., communications packets). In some cases, the data structure includes program instructions (e.g., application code) communicated through the Internet 148 and/or through any one or more instances of communications link 115. Received program instructions can be processed and/or executed by a CPU as it is received and/or program instructions can be stored in any volatile or non-volatile storage for later execution. Program instructions can be transmitted via an upload (e.q., an upload from an access device over the Internet 148 to computing platform 106). Further, program instructions and/or the results of executing program instructions can be delivered to a particular user via a download (e.q., a download from computing platform 106 over the Internet 148 to an access device).

Configuration 151 is merely one example configuration. Other configurations or partitions can include further data processors, and/or multiple communications interfaces, and/or multiple storage devices, etc. within a partition. For example, a partition can bound a multi-core processor (e.g., possibly including embedded or collocated memory), or a partition can bound a computing cluster having a plurality of computing elements, any of which computing elements are connected directly or indirectly to a communications link. A first partition can be configured to communicate to a second partition. A particular first partition and a particular second partition can be congruent (e.q., in a processing element array) or can be different (e.g., comprising disjoint sets of components).

A cluster is often embodied as a collection of computing nodes that can communicate between each other through a local area network (e.g., LAN or virtual LAN (VLAN)) or a backplane. Some clusters are characterized by assignment of a particular set of the aforementioned computing nodes to access a shared storage facility that is also configured to communicate over the local area network or backplane. In many cases, the physical bounds of a cluster are defined by a mechanical structure such as a cabinet or such as a chassis or rack that hosts a finite number of mounted-in computing units. A computing unit in a rack can take on a role as a server, or as a storage unit, or as a networking unit, or any combination therefrom. In some cases, a unit in a rack is dedicated to provisioning of power to other units. In some cases, a unit in a rack is dedicated to environmental conditioning functions such as filtering and movement of air through the rack and/or temperature control for the rack. Racks can be combined to form larger clusters. For example, the LAN of a first rack having a quantity of 32 computing nodes can be interfaced with the LAN of a second rack having 16 nodes to form a two-rack cluster of 48 nodes. The former two LANs can be configured as subnets, or can be configured as one VLAN. Multiple clusters can communicate between one module to another over a WAN (e.q., when geographically distal) or a LAN (e.q., when geographically proximal).

In some embodiments, a module can be implemented using any mix of any portions of memory and any extent of hard-wired circuitry including hard-wired circuitry embodied as a data processor. Some embodiments of a module include one or more special-purpose hardware components (e.g., power control, logic, sensors, transducers, etc.). A data processor can be organized to execute a processing entity that is configured to execute as a single process or configured to execute using multiple concurrent processes to perform work. A processing entity can be hardware-based (e.q., involving one or more cores) or software-based, and/or can be formed using a combination of hardware and software that implements logic, and/or can carry out computations and/or processing steps using one or more processes and/or one or more tasks and/or one or more threads or any combination thereof.

Some embodiments of a module include instructions that are stored in a memory for execution so as to facilitate operational and/or performance characteristics pertaining to management of block stores. Various implementations of the data repository comprise storage media organized to hold a series of records and/or data structures.

Further details regarding general approaches to managing data repositories are described in U.S. Patent No. 8,601,473 titled "ARCHITECTURE FOR MANAGING I/O AND STORAGE FOR A VIRTUALIZATION ENVIRONMENT," issued on December 3, 2013, which is hereby incorporated by reference in its entirety.

Further details regarding general approaches to managing and maintaining data in data repositories are described in U.S. Patent No. 8,549,518 titled "METHOD AND SYSTEM FOR IMPLEMENTING A MAINTENANCE SERVICE FOR MANAGING I/O AND STORAGE FOR A VIRTUALIZATION ENVIRONMENT," issued on October 1, 2013, which is hereby incorporated by reference in its entirety.

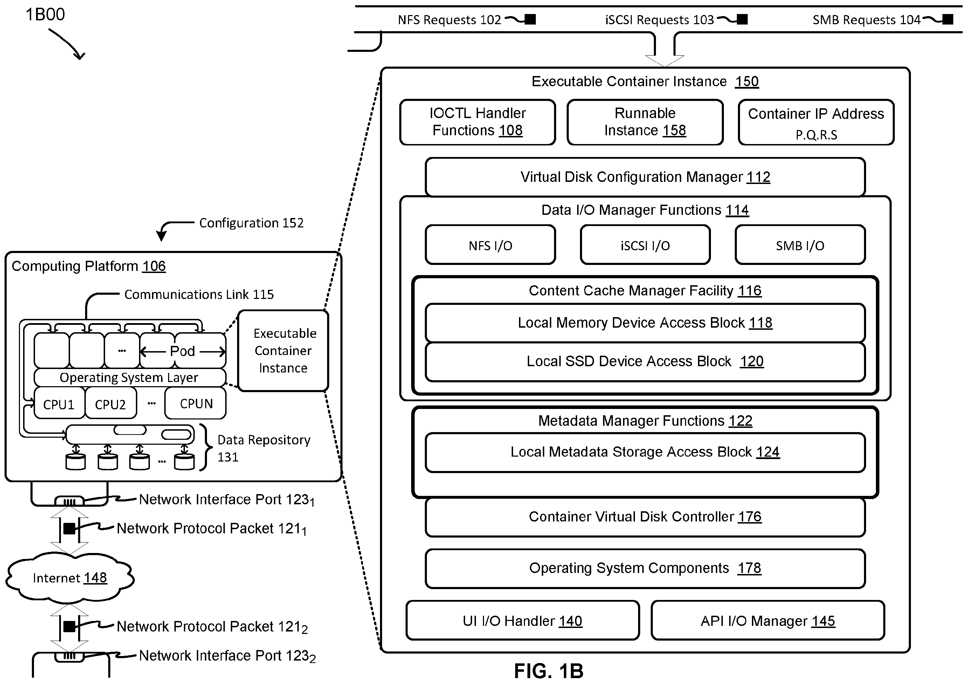

FIG. 1B depicts a block diagram illustrating another virtualization system architecture 1B00 configured to implement one or more aspects of the present embodiments. As shown in FIG. 1B, virtualization system architecture 1B00 includes a collection of interconnected components, including an executable container instance 150 in a configuration 152. Configuration 152 includes a computing platform 106 that supports an operating system layer (as shown) that performs addressing functions such as providing access to external requestors (e.q., user virtual machines or other processes) via an IP address (e.g., "P.Q.R.S", as shown). Providing access to external requestors can include implementing all or portions of a protocol specification (e.q., "http:") and possibly handling port-specific functions. In some embodiments, external requestors (e.q., user virtual machines or other processes) rely on the aforementioned addressing functions to access a virtualized controller for performing all data storage functions. Furthermore, when data input or output requests are received from a requestor running on a first node are received at the virtualized controller on that first node, then in the event that the requested data is located on a second node, the virtualized controller on the first node accesses the requested data by forwarding the request to the virtualized controller running at the second node. In some cases, a particular input or output request might be forwarded again (e.g., an additional or Nth time) to further nodes. As such, when responding to an input or output request, a first virtualized controller on the first node might communicate with a second virtualized controller on the second node, which second node has access to particular storage devices on the second node or, the virtualized controller on the first node can communicate directly with storage devices on the second node.

The operating system layer can perform port forwarding to any executable container (e.q., executable container instance 150). An executable container instance can be executed by a processor. Runnable portions of an executable container instance sometimes derive from an executable container image, which in turn might include all, or portions of any of, a Java archive repository (JAR) and/or its contents, and/or a script or scripts and/or a directory of scripts, and/or a virtual machine configuration, and can include any dependencies therefrom. In some cases, a configuration within an executable container might include an image comprising a minimum set of runnable code. Contents of larger libraries and/or code or data that would not be accessed during runtime of the executable container instance can be omitted from the larger library to form a smaller library composed of only the code or data that would be accessed during runtime of the executable container instance. In some cases, start-up time for an executable container instance can be much faster than start-up time for a virtual machine instance, at least inasmuch as the executable container image might be much smaller than a respective virtual machine instance. Furthermore, start-up time for an executable container instance can be much faster than start-up time for a virtual machine instance, at least inasmuch as the executable container image might have many fewer code and/or data initialization steps to perform than a respective virtual machine instance.

An executable container instance can serve as an instance of an application container or as a controller executable container. Any executable container of any sort can be rooted in a directory system and can be configured to be accessed by file system commands (e.g., "Is" or "Is -a", etc.). The executable container might optionally include operating system components 178, however such a separate set of operating system components need not be provided. As an alternative, an executable container can include runnable instance 158, which is built (e.q., through compilation and linking, or just-in-time compilation, etc.) to include all of the library and OS-like functions needed for execution of the runnable instance. In some cases, a runnable instance can be built with a virtual disk configuration manager, any of a variety of data IO management functions, etc. In some cases, a runnable instance includes code for, and access to, container virtual disk controller 176. Such a container virtual disk controller can perform any of the functions that the aforementioned CVM virtual disk controller 126 can perform, yet such a container virtual disk controller does not rely on a hypervisor or any particular operating system so as to perform its range of functions.

In some environments, multiple executable containers can be collocated and/or can share one or more contexts. For example, multiple executable containers that share access to a virtual disk can be assembled into a pod (e.g., a Kubernetes pod). Pods provide sharing mechanisms (e.g., when multiple executable containers are amalgamated into the scope of a pod) as well as isolation mechanisms (e.g., such that the namespace scope of one pod does not share the namespace scope of another pod).

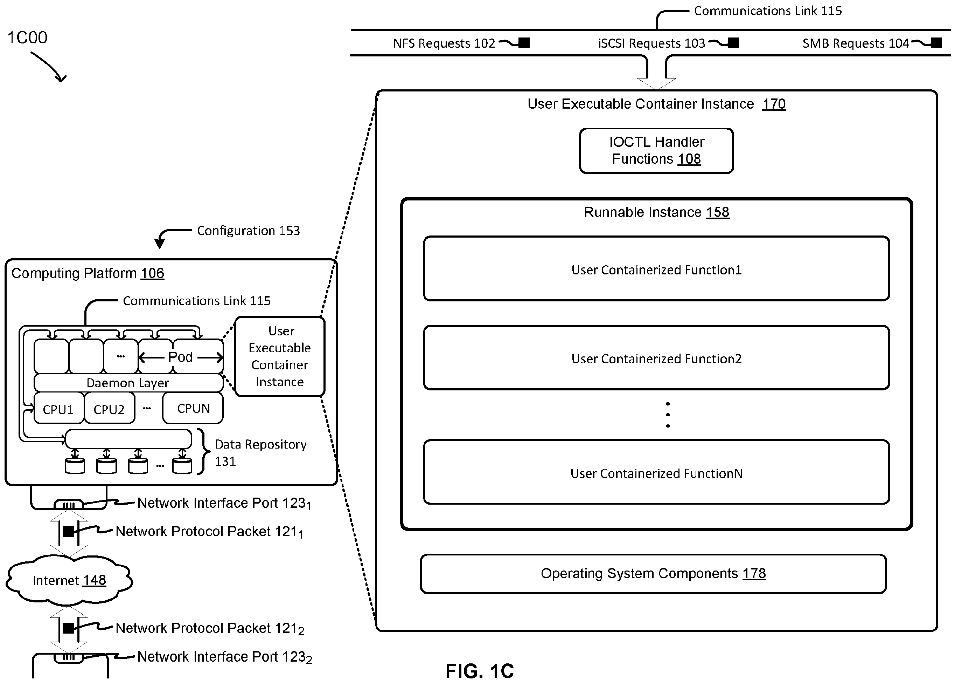

FIG. 1C is a block diagram illustrating virtualization system architecture 1C00 configured to implement one or more aspects of the present embodiments. As shown in FIG. 1C, virtualization system architecture 1C00 includes a collection of interconnected components, including a user executable container instance in configuration 153 that is further described as pertaining to user executable container instance 170. Configuration 153 includes a daemon layer (as shown) that performs certain functions of an operating system.

User executable container instance 170 comprises any number of user containerized functions (e.g., user containerized function1, user containerized function2, ..., user containerized functionN). Such user containerized functions can execute autonomously or can be interfaced with or wrapped in a runnable object to create a runnable instance (e.q., runnable instance 158). In some cases, the shown operating system components 178 comprise portions of an operating system, which portions are interfaced with or included in the runnable instance and/or any user containerized functions. In some embodiments of a daemon-assisted containerized architecture, computing platform 106 might or might not host operating system components other than operating system components 178. More specifically, the shown daemon might or might not host operating system components other than operating system components 178 of user executable container instance 170.

In some embodiments, the virtualization system architecture 1A00, 1B00, and/or 1C00 can be used in any combination to implement a distributed platform that contains multiple servers and/or nodes that manage multiple tiers of storage where the tiers of storage might be formed using the shown data repository 131 and/or any forms of network accessible storage. As such, the multiple tiers of storage can include storage that is accessible over communications link 115. Such network accessible storage can include cloud storage or networked storage (e.q., a SAN or storage area network). Unlike prior approaches, the disclosed embodiments permit local storage that is within or directly attached to the server or node to be managed as part of a storage pool. Such local storage can include any combinations of the aforementioned SSDs and/or HDDs and/or RAPMs and/or hybrid disk drives. The address spaces of a plurality of storage devices, including both local storage (e.q., using node-internal storage devices) and any forms of network-accessible storage, are collected to form a storage pool having a contiguous address space.

Significant performance advantages can be gained by allowing the virtualization system to access and utilize local (e.q., node-internal) storage. This is because I/O performance is typically much faster when performing access to local storage as compared to performing access to networked storage or cloud storage. This faster performance for locally attached storage can be increased even further by using certain types of optimized local storage devices such as SSDs or RAPMs, or hybrid HDDs, or other types of high-performance storage devices.

In some embodiments, each storage controller exports one or more block devices or NFS or iSCSI targets that appear as disks to user virtual machines or user executable containers. These disks are virtual since they are implemented by the software running inside the storage controllers. Thus, to the user virtual machines or user executable containers, the storage controllers appear to be exporting a clustered storage appliance that contains some disks. User data (including operating system components) in the user virtual machines resides on these virtual disks.

In some embodiments, any one or more of the aforementioned virtual disks can be structured from any one or more of the storage devices in the storage pool. In some embodiments, a virtual disk is a storage abstraction that is exposed by a controller virtual machine or container to be used by another virtual machine or container. In some embodiments, the virtual disk is exposed by operation of a storage protocol such as iSCSI or NFS or SMB. In some embodiments, a virtual disk is mountable. In some embodiments, a virtual disk is mounted as a virtual storage device.

In some embodiments, some or all of the servers or nodes run virtualization software. Such virtualization software might include a hypervisor (e.g., as shown in configuration 151) to manage the interactions between the underlying hardware and user virtual machines or containers that run client software.

Distinct from user virtual machines or user executable containers, a special controller virtual machine (e.q., as depicted by controller virtual machine instance 130) or as a special controller executable container is used to manage certain storage and I/O activities. Such a special controller virtual machine is sometimes referred to as a controller executable container, a service virtual machine (SVM), a service executable container, or a storage controller. In some embodiments, multiple storage controllers are hosted by multiple nodes. Such storage controllers coordinate within a computing system to form a computing cluster.

The storage controllers are not formed as part of specific implementations of hypervisors. Instead, the storage controllers run above hypervisors on the various nodes and work together to form a distributed system that manages all of the storage resources, including the locally attached storage, the networked storage, and the cloud storage. In example embodiments, the storage controllers run as special virtual machines-above the hypervisors-thus, the approach of using such special virtual machines can be used and implemented within any virtual machine architecture. Furthermore, the storage controllers can be used in conjunction with any hypervisor from any virtualization vendor and/or implemented using any combinations or variations of the aforementioned executable containers in conjunction with any host operating system components.

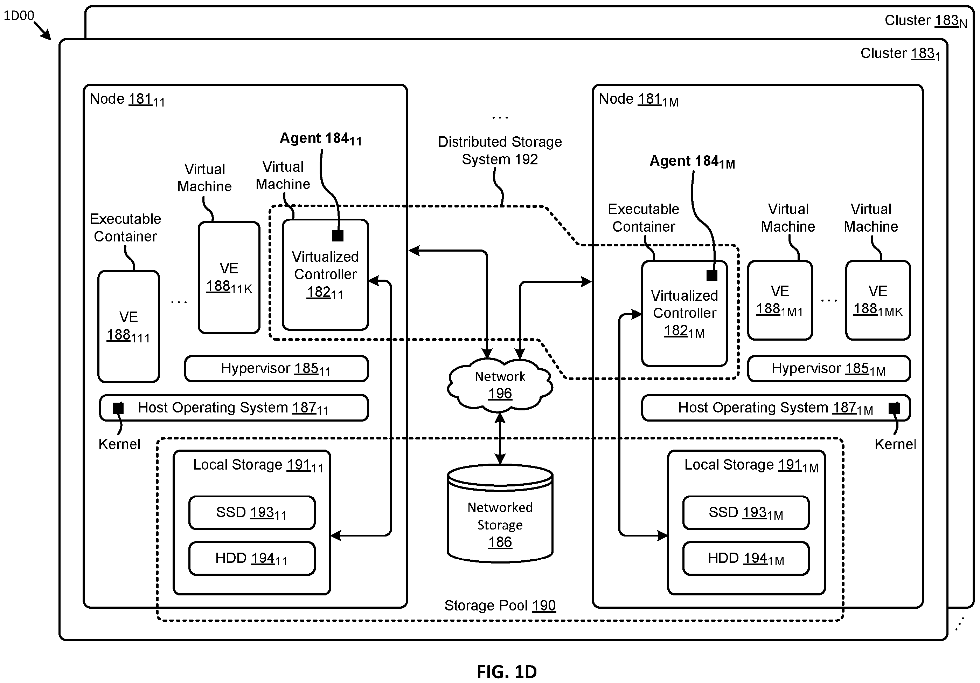

FIG. 1D is a block diagram illustrating virtualization system architecture 1D00 configured to implement one or more aspects of the present embodiments. As shown in FIG. 1D, virtualization system architecture 1D00 includes a distributed virtualization system that includes multiple clusters (e.q., cluster 183₁, ..., cluster 183_{N}) comprising multiple nodes that have multiple tiers of storage in a storage pool. Representative nodes (e.q., node 181₁₁, ..., node 181_{1M}) and storage pool 190 associated with cluster 183₁ are shown. Each node can be associated with one server, multiple servers, or portions of a server. The nodes can be associated (e.q., logically and/or physically) with the clusters. As shown, the multiple tiers of storage include storage that is accessible through a network 196, such as a networked storage 186 (e.g., a storage area network or SAN, network attached storage or NAS, etc.). The multiple tiers of storage further include instances of local storage (e.g., local storage 191₁₁, ..., local storage 191_{1M}). For example, the local storage can be within or directly attached to a server and/or appliance associated with the nodes. Such local storage can include solid state drives (SSD 193₁₁, ..., SSD 193_{1M}), hard disk drives (HDD 194₁₁, ..., HDD 194_{1M}), and/or other storage devices.

As shown, any of the nodes of the distributed virtualization system can implement one or more user virtualized entities (e.g., VE 188¹¹¹, ..., VE 188^{11K}, ..., VE 188^{1M1}, ..., VE 188^{1MK}), such as virtual machines (VMs) and/or executable containers. The VMs can be characterized as software-based computing "machines" implemented in a container-based or hypervisor-assisted virtualization environment that emulates the underlying hardware resources (e.g., CPU, memory, etc.) of the nodes. For example, multiple VMs can operate on one physical machine (e.q., node host computer) running a single host operating system (e.q., host operating system 187¹¹, ..., host operating system 187^{1M}), while the VMs run multiple applications on various respective guest operating systems. Such flexibility can be facilitated at least in part by a hypervisor (e.q., hypervisor 185¹¹, ..., hypervisor 185^{1M}), which hypervisor is logically located between the various guest operating systems of the VMs and the host operating system of the physical infrastructure (e.g., node).

As an alternative, executable containers can be implemented at the nodes in an operating system-based virtualization environment or in a containerized virtualization environment. The executable containers are implemented at the nodes in an operating system virtualization environment or container virtualization environment. The executable containers can include groups of processes and/or resources (e.q., memory, CPU, disk, etc.) that are isolated from the node host computer and other containers. Such executable containers directly interface with the kernel of the host operating system (e.g., host operating system 187₁₁, ..., host operating system 187_{1M}) without, in most cases, a hypervisor layer. This lightweight implementation can facilitate efficient distribution of certain software components, such as applications or services (e.g., micro-services). Any node of a distributed virtualization system can implement both a hypervisor-assisted virtualization environment and a container virtualization environment for various purposes. Also, any node of a distributed virtualization system can implement any one or more types of the foregoing virtualized controllers so as to facilitate access to storage pool 190 by the VMs and/or the executable containers.

Multiple instances of such virtualized controllers can coordinate within a cluster to form the distributed storage system 192 which can, among other operations, manage the storage pool 190. This architecture further facilitates efficient scaling in multiple dimensions (e.q., in a dimension of computing power, in a dimension of storage space, in a dimension of network bandwidth, etc.).

In some embodiments, a particularly configured instance of a virtual machine at a given node can be used as a virtualized controller in a hypervisor-assisted virtualization environment to manage storage and I/O (input/output or IO) activities of any number or form of virtualized entities. For example, the virtualized entities at node 181₁₁ can interface with a controller virtual machine (e.q., virtualized controller 18211) through hypervisor 185₁₁ to access data of storage pool 190. In such cases, the controller virtual machine is not formed as part of specific implementations of a given hypervisor. Instead, the controller virtual machine can run as a virtual machine above the hypervisor at the various node host computers. When the controller virtual machines run above the hypervisors, varying virtual machine architectures and/or hypervisors can operate with the distributed storage system 192. For example, a hypervisor at one node in the distributed storage system 192 might correspond to software from a first vendor, and a hypervisor at another node in the distributed storage system 192 might correspond to a second software vendor. As another virtualized controller implementation example, executable containers can be used to implement a virtualized controller (e.q., virtualized controller 182_{1M}) in an operating system virtualization environment at a given node. In this case, for example, the virtualized entities at node 181_{1M} can access the storage pool 190 by interfacing with a controller container (e.g., virtualized controller 182_{1M}) through hypervisor 185_{1M} and/or the kernel of host operating system 187_{1M}.

In some embodiments, one or more instances of an agent can be implemented in the distributed storage system 192 to facilitate the herein disclosed techniques. Specifically, agent 184₁₁ can be implemented in the virtualized controller 182₁₁, and agent 184_{1M} can be implemented in the virtualized controller 182_{1M}. Such instances of the virtualized controller can be implemented in any node in any cluster. Actions taken by one or more instances of the virtualized controller can apply to a node (or between nodes), and/or to a cluster (or between clusters), and/or between any resources or subsystems accessible by the virtualized controller or the agents.

### Exemplary Computing System

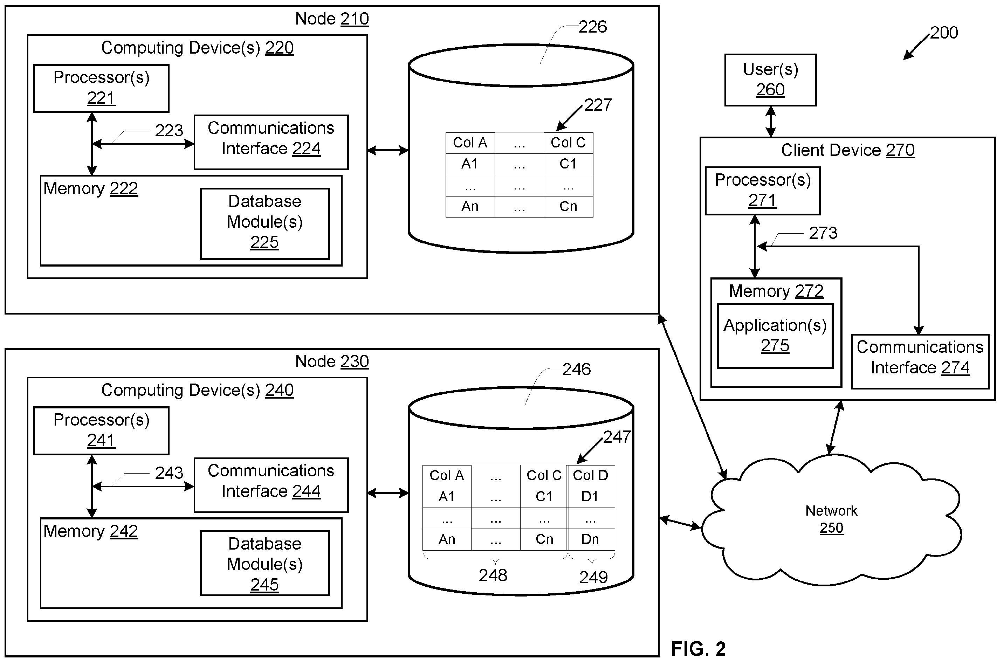

FIG. 2 is a block diagram illustrating a computing system 200 configured to implement one or more aspects of the present embodiments. As shown, computing system 200 includes, without limitation, a node 210, a node 230, a network 250, and a client device 270. Node 210 and node 230 can be located in the same or different clusters. Node 210 includes, without limitation, one or more computing devices 220 and storage 226. Each computing device 220 includes, without limitation, one or more processors 221, memory 222, a bus 223, and a communications interface 224. Memory 222 stores, without limitation, one or more database modules 225. Storage 226 includes, without limitation, a database containing a database portion 227. The database portion 227, as any database portion referenced herein, can comprise a database table, one or more documents in a document-based database, or a collection of key-value pairs in a key-value pair database.

Node 230 includes, without limitation, one or more computing devices 240 and storage 246. Each computing device 240 includes, without limitation, one or more processors 241, memory 242, a bus 243, and a communications interface 244. Memory 242 stores, without limitation, one or more database modules 245. Storage 246 includes, without limitation, a database containing a database portion 247. Client device 270 includes, without limitation, one or more processors 271, memory 272, a bus 273, and a communications interface 274. Memory 272 includes, without limitation, one or more applications 275. The computing system 200 described herein is illustrative and any other technically feasible configurations fall within the scope of the present disclosure.

Further, in the context of this disclosure, the computing elements shown in computing system 200 can correspond to a physical computing system (e.q., a system in a data center) or can include a virtual computing instance. In various embodiments, computing system 200 and/or the elements of computing system 200 can be included in any of the virtualization system architectures shown in FIGs. 1A-1D.

Each of the one or more processors 221, 241, and/or 271 include any suitable processors implemented as a central processing unit (CPU), a graphics processing unit (GPU), an application-specific integrated circuit (ASIC), a field programmable gate array (FPGA), an artificial intelligence (Al) accelerator, any other type of processor, or a combination of different processors, such as a CPU configured to operate in conjunction with a GPU. In general, one or more processors 221, 241, and/or 271 can be any technically feasible hardware unit capable of processing data and/or executing software applications.

Each of memories 222, 242, and/or 272 include a random-access memory (RAM) module, a flash memory unit, any other type of memory unit, or a combination of different memory types. The one or more processors 221, 241, and/or 271 are configured to read data from and write data to respective memories 222, 242, and/or 272. Memories 222, 242, and/or 272 includes various software programs that include one or more instructions that can be executed by the respective one or more processors 221, 241, and/or 271 and application data associated with the software programs.

Each of buses 223, 243, and/or 273 interconnect the subsystems and devices within the corresponding device 220, 240, and/or 270.

Each of communications interfaces 224, 244, and/or 274 includes any technically feasible hardware and/or software allowing respective devices 220, 240, and/or 270 to communicate with external devices, such as storage 226 and/or 246, network 250, and/or the like. Each of communications interfaces 224, 244, and/or 274 can include one or more input/output interfaces, one or more network interfaces, and/or the like.

Storage 226 and/or 246 include non-volatile storage for applications and data, and may include one or more fixed or removable disk drives, HDDs, SSD, NVMes, vDisks, flash memory devices, and/or other magnetic, optical, and/or solid-state storage devices.

Network 250 provides communications between client device 270, computing device(s) 220 in node 210, and computing device(s) 240 in node 230. Network 250 can include any technically feasible networks, such as one or more wired, wireless, or cellular networks, one or more local (e.q., an Ethernet) or wide area networks (e.q., the internet), and/or any combination thereof.

Database module(s) 225 include one or more software modules allowing computing device(s) 220 in node 210 to manage one or more databases and/or database tables stored in storage 226, such as database portion 227. Database module(s) 225 provide support for various operations on the database(s) or portion(s) such as creation of new databases or new database portions, responding to queries, adding and/or modifying data in the database, replicating databases and/or portions of databases, and/or the like. The databases and/or database portions can be structured query language (SQL) and/or NoSQL databases and/or database portions. As shown in Figure 2, database module(s) 225 are managing database portion 227, which includes columns A to C, and records (or rows) 1 to n that include corresponding values A1 to Cn for columns A to C in each of records 1 to n.

Database module(s) 245 include one or more software modules allowing computing device(s) 240 in node 210 to manage one or more databases and/or database portions stored in storage 246, such as database portion 247. Database module(s) 245 provide support for various operations on the database(s) or database portion(s) such as creation of new databases or new database portions, responding to queries, adding and/or modifying data in the database portion(s), replicating databases and/or database portions, and/or the like. The databases and/or database tables can be SQL and/or NoSQL databases and/or database portions. The database module(s) 245 can also create writeable partitions within a database portion 227. A writeable partition can be associated with a read-only partition that is replicated from another database so that users or client applications can write data to the writeable partition in the same records that also include read-only data stored in the replicated read-only partition of a database portion 227.

While the database portion 227, database portion 247, or any other portions of any other databases are visually depicted as tables, it should be appreciated that the embodiments are not limited to database structures that utilize tables comprising columns and/or rows. The depicted database portion 227 and/or database portion 247 are illustrated and discussed as tables for ease of depiction and discussion. However, it should be appreciated that a database portion 227 stored as one or more documents, such as a JSON object, in a document-based database or a series of key-value pairs in a key-value database can also be utilized in accordance with the principles discussed herein.

In the examples of FIG. 2, the database module(s) 225 can replicate the data stored in database portion 227 to another node, such as node 230. Database replication includes a process of creating or maintaining multiple copies of the same data from a database, such as database portion 227, a different location or a different database, such as storage 246 in node 230. The database module(s) 225 can synchronize the data from the database portion 227 to the replicated storage location so that the replicated storage location maintains an up-to-date copy of the database portion 227. The replicated storage location can be synchronized in real-time or in substantially real time.

In many cases, when a portion of a database is replicated to another location, the replicated portion of the database stored in the other location is stored such that the replicated portion of the database is read-only for users or client applications in the replicated location. In general, only the database module(s) 225 or process that is overseeing the data replication has the ability to write to the replicated portion of the database for data integrity purposes.

Accordingly, as shown in FIG. 2, database module(s) 245 are managing database portion 247, which includes portions A to C and records 1 to n along with the corresponding values A1 to Cn replicated from database portion 227. The database portion 247 corresponds to the portion of the database portion 227 that is replicated and stored in the database portion 247. The database portion 227 that is replicated to the database portion 247 is included in a read-only partition 248.

As shown, database module(s) 245 is also managing an additional portion D with values D1 to Dn for the records 1 to n in a writeable partition 249. The database module(s) 245 create a writeable partition in which data is stored by a user or client application accessing the database portion 247. The writeable partition 249 can take the form of an additional column to a database table that is made writeable while the read-only partition 248 to which data is replicated from database portion 227 remains read-only. In another example, the writeable partition 249 can comprise an additional document in a document-based database, or an additional writeable portion of a key-value database in which key-value pairs can be written by the database module(s) 245. The writeable partition 249 can comprise fields that are associated with the fields of the read-only partition 248 of the database portion 247. The read-only partition 248 can be created with a partition identifier or metadata indicating that the read-only partition 248 is read-only as to users or client applications on the node 230. The writeable partition 249 can be created with a partition identifier or metadata indicating that the writeable partition 249 is writeable as to one or more users or client applications on the node 230. Additionally, individual data fields stored to the read-only partition 248 can be stored with metadata indicating that the data fields are read-only. Similarly, individual data fields stored to the writeable partition 249 can be stored with metadata indicating that the data fields are writeable.

In the case of a database table that is replicated to the database portion 247, the database module(s) 245 write an additional column(s) to the database table in a writeable partition 249 of the database portion 247 so that rows within the additional column(s) are associated with rows of the read-only partition 248. In the case of a document-based database portion that is replicated to the database portion 247, the database module(s) 245 creates a new document as the writeable partition 249 of the database portion 247. In the case of a key-value pair database, the database module(s) 245 creates a new field in which key-value pair(s) can be stored as the writeable partition 249 of the database portion 247. The writeable partition 249 of the database portion 247 can be implemented as mutually exclusive from the read-only partition 248 of the database portion 247 to maintain consistency and atomicity of the database portion 247.

Application(s) 275 executed on client device 270 support the computing needs of one or more users 260. Application(s) 275 allow user(s) 260 to perform one or computing tasks to use one or more databases. For example, application(s) 275 can execute one or more queries on database portion 227 using database module(s) 225. Application(s) 275 can also execute one or more queries on database portion 247 using database module(s) 245. Further application(s) 275 can use database module(s) 245 to create writeable partition 249 in database portion 247, generate derived data for each of records 1 to n for storing in column D as values D1 to Dn, execute queries on the read-only data in read-only partition 248 and/or writeable partition 249, and/or the like.

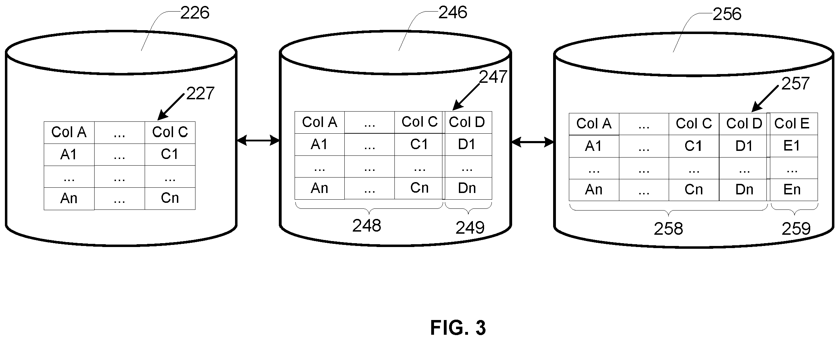

FIG. 3 is an example of serial replication of database portions, according to some embodiments. As shown in FIG. 3, the database portion 227 is replicated onto storage 246 as database portion 247. Additionally, database portion 247 includes a read-only partition 248 created by database module(s) 245where replicated data from database portion 227 is stored. The database portion 247 further includes a writeable partition 249 created by database module(s) 245 where writeable data provided by a user, such as via an application(s) 275, is stored. In one implementation, the writeable partition 249 includes a column in the database table associated with the read-only partition 248 that is replicated from database portion 227.

In the scenario shown in FIG. 3, the database portion 247 that includes read-only partition 248 and writeable partition 249 is further replicated downstream to another database. In the non-limiting example of FIG. 3, the database portion 247 is replicated to storage 256 as database portion 257. Database portion 257 includes a read-only partition 258 that includes the data from read-only partition 248 as well as the writeable partition 249 from the database portion 247. Because the read-only partition 248 and writeable partition 249 are being replicated to the database portion 257, a corresponding database module associated with storage 256 stores the read-only partition 248 and writeable partition 249 as a read-only partition 258 in the database portion 257.

Analogously to the case of a database table that is replicated to the database portion 247, the database module(s) managing storage 256 can write an additional column to the database table in a writeable partition 259 of the database portion 247. Similarly, in the case of a document-based database portion that is replicated to the database portion 257, the database module corresponding to storage 256 can create a new document as the writeable partition 259 of the read-only partition 258. In the case of a key-value pair database, the database module corresponding to storage 256 can create a new field in which key-value pair(s) can be stored in writeable partition 259 of the read-only partition 258. The writeable partition 259 of the database portion 257 can also be implemented as mutually exclusive from the read-only partition 258 of the database portion 257 to maintain consistency and atomicity of the database portion 257.

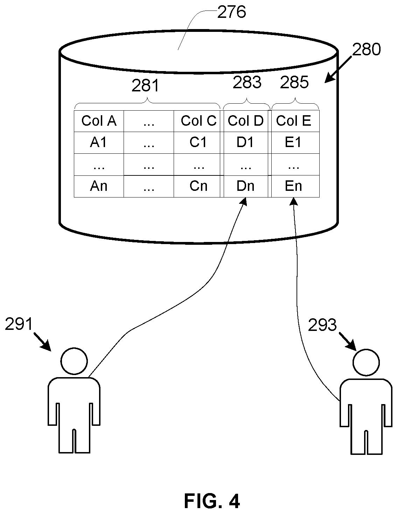

FIG. 4 is an example of a database portion with partitions associated with different users, according to some embodiments. In the scenario of FIG. 4, a database portion 280 includes a read-only partition 281, a first writeable partition 283, and a second writeable partition 285. The read-only partition 281 includes a database portion that is replicated from another database, such as a database from another node or another cluster.

The first writeable partition 283 can be created by a database module managing storage 276, which can implement a database on one or more computing devices. The first writeable partition 283 is user-specific so that only user 291, a user, or an application with appropriate credentials as authenticated by a database module can write records to the first writeable partition 283. However, the first writeable partition 283 is read-only as to user 293 or a user without the appropriate credentials to write data to first writeable partition 283.

Similarly, the database module creates second writeable partition 285 to be user-specific so that only user 293, a user, or an application with appropriate credentials as authenticated by a database module corresponding to the storage 276 can write records to the second writeable partition 285. However, the second writeable partition 285 is read-only as to user 291 or a user without the appropriate credentials to write data to second writeable partition 285.

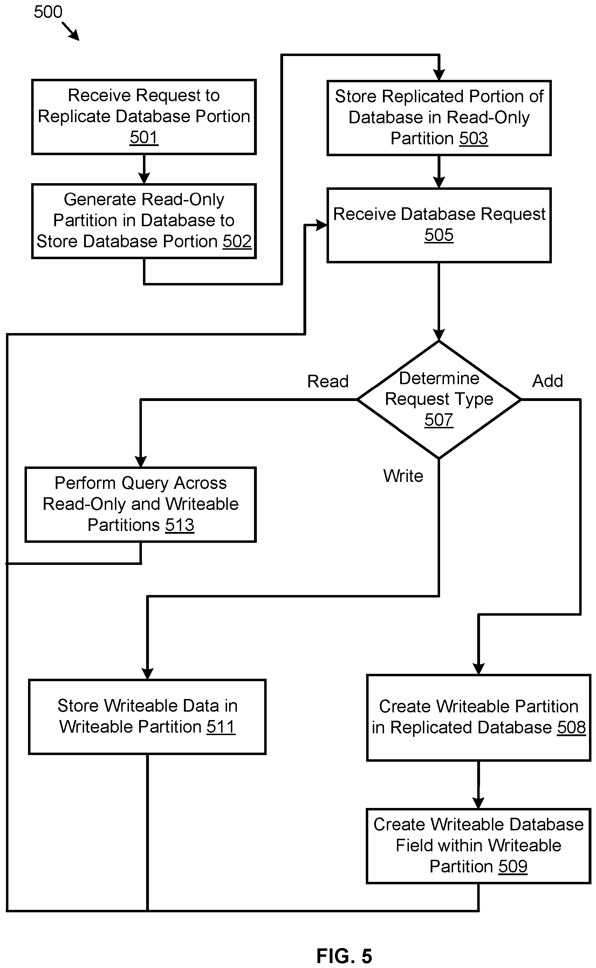

FIG. 5 is a flowchart of method steps for managing a database portion, according to some embodiments. Although the method steps are described in conjunction with FIGs. 1-4, persons skilled in the art will understand that any system configured to perform the method steps, in any order, falls within the scope of the present invention. The method 500 of FIG. 5 can be implemented by one or more of the database module(s) 225, 245, or an application running in a node. In the discussion of FIG. 5, a non-limiting illustrative discussion is presented with respect to node 230 and database module(s) 245 performing the steps of the method.

As shown in FIG. 5, the method 500 begins at step 501, where a database module(s) 245 receives a request to replicate a database portion 227 from another node 210. The request can comprise comprises a request that is submitted to an API that is submitted from a database module(s) 225 running on the node 210 on which the database portion 227 is stored. The node 210 operates as the primary database with respect to the database portion 227, and the node 230 operates as a replica database onto which the database portion 227 is replicated.

At step 502, the database module(s) 245 on the node 230 generates a read-only partition 248 in which data from the database portion 227 that is being replicated can be stored. As noted above, the replica database is often operated in a read-only mode such that only the database module that is managing data replication can write to the read-only partition 248. In some implementations, the database module(s) 225 executing on the node 210 can write to the read-only partition 248 to manage the data replication.

At step 503, the database module(s) 245 stores the database portion 227 that is being replicated to the node 230 in the read-only partition 248. In other words, the database module(s) 245 receives the replica of the database portion 227. The database portion 227 can be synchronized with the read-only partition 248 on an ongoing basis to maintain replication between the database portion 227 and the read-only partition 248.

At step 505, the database module(s) 245 receives a database request. The request can comprise one or more of various types. The request can be received as an API request submitted by a client application, such as one of the applications 275. The request can also be submitted by a user through a database administration console.

At step 507, the database module(s) 245 determines a request type. In one instance, the request type is a request to add a writeable partition 249 to the database portion 247 where the data from database portion 227 is being replicated. The request can be obtained from user or a client application that seeks to create a column, field, or other type of database construct into which data can be stored.

If the request is a request to add a writeable partition 249, method 500 moves to step 508, where the database module(s) 245 creates the writeable partition 249 in the database portion 247. The database module(s) 245 can write a partition identifier or metadata indicating that the partition is writable to the writeable partition 249.

At step 509, the database module(s) 245 creates a writeable database field within the writeable partition 249. The writeable database can comprise a column added to a table, a document added to a document-based database, or a key-value field added to a key-value database. For example, the database module(s) 245 can create column D as shown in the examples of FIGs. 2 and 3. After the writeable database field is recreated, method 500 returns to step 505 to receive another database request.

If, at step 507, the request type is a request to write data to an already existing writeable partition 249 of the database portion 247, method 500 proceeds to step 511. For example, the request received during step 505 can comprise a request to insert data into the writeable partition 249. At step 511, the database module(s) 245 stores writeable records to the writeable partition 249 within the database portion 247. In some examples, the data to be written in the writeable partition 249 of a record of the database portion 247 is derived from data stored in the read-only partition 248 of the same record. In some embodiments, the database module(s) 245 can determine whether a user or a client application submitting the request to store writeable records into the writeable partition 249 is authorized to do so before storing the writeable data to the writeable partition 249. After the writeable data is stored to the writeable partition 249, method 500 returns to step 505 to receive another database request.

If, at step 507, the request type is a request to read data from an already existing writeable partition 249 of the database portion 247 or from the read-only partition 248, the method can proceed from step 507 to step 513. The request can comprise a query on the database portion 247, for example. At step 513, the database module(s) 245 can obtain a request to read data from the database portion 247. The the database module(s) 245 can perform the query across the read-only partition 248 and the writeable partition 249 of the database portion 247. The query across the read-only partition 248 and the writeable partition 249 are performed without having to perform a join operation across multiple database tables that store read-only data and writeable data because the read-only partition 248 and writeable partition 249 are stored in the same database portion 247. After the query is performed, method 500 returns to step 505 to receive another database request.

In sum, the disclosed techniques allow for data to be written in conjunction with a replicated database in a writeable partition. The writeable partition can be stored alongside a read-only partition that corresponds to the replica of the replicated database. Users or client applications can store data to the writeable partition of the database alongside records in the read-only partition. Users or client applications can also query across both the writeable partition and the read-only partition of the database.

At least one technical advantage of the disclosed techniques relative to prior art is that, with the disclosed techniques, clients are enabled to enhance and manipulate replicated database portions directly, thereby reducing the need for additional data structures, complex join operations, and complex life cycle management techniques. The use of the enhanced database portions reduces the storage and computational resources required to manage and access databases with both replicated and derived data relative to conventional approaches. These technical advantages provide one or more technological improvements over prior art approaches.
1. In some embodiments, one or more non-transitory computer-readable media store program instructions that, when executed by one or more processors of a first node, cause the one or more processors to perform a method comprising: receiving a replica of a portion of a database; storing the replica of the portion of the database in a read-only partition; adding a field to the portion of the database in a writeable partition; and writing data to the added field.
2. The one or more non-transitory computer-readable media of clause 1, wherein the replica of the portion of the database includes records received from a second node.
3. The one or more non-transitory computer-readable media of any of clauses 1-2, wherein the method further comprises: receiving a query to execute on the portion of the database to access data in data in both the read-only partition and the writeable partition; and executing the query without using a join.
4. The one or more non-transitory computer-readable media of any of clauses 1-3, wherein the method further comprises replicating the portion of the database including both the read-only partition and the writeable partition to another node.
5. The one or more non-transitory computer-readable media of any of clauses 1-4, wherein the portion of the database comprises a database table, a plurality of documents from a document-based database, or a plurality of key-value pairs from a key-value database.
6. The one or more non-transitory computer-readable media of any of clauses 1-5, wherein the read-only partition is associated with a partition identifier identifying the read-only partition as read-only.
7. The one or more non-transitory computer-readable media of any of clauses 1-6, wherein the writeable partition is associated with a partition identifier identifying the writeable partition as writeable.
8. The one or more non-transitory computer-readable media of any of clauses 1-7, wherein each portion of the database in the read-only partition is associated with metadata indicating that the portion of the database in the read-only partition is read-only.
9. The one or more non-transitory computer-readable media of any of clauses 1-8, wherein each portion of the database in the writeable partition is associated with metadata indicating that each column is writeable.
10. The one or more non-transitory computer-readable media of any of clauses 1-9, wherein the portion of the database comprises a database table, and adding the field to the portion of the database in the writeable partition further comprises adding a writeable column to the database table.
11. The one or more non-transitory computer-readable media of any of clauses 1-10, wherein the method further comprises adding a second field to the portion of the database in the writeable partition, wherein the field is writeable only by a first user and the second field is writeable only by a second user.
12. In some embodiments, a system comprises: memory storing instructions; and one or more processors coupled to the memory and, when executing the instructions, are configured to perform operations comprising: receiving a replica of a portion of a database; storing the replica of the portion of the database in a read-only partition; adding a field to the portion of the database in a writeable partition; and writing data to the added field.
13. The system of clause 12, wherein the replica of the portion of the database includes records received from a second node.
14. The system of any of clauses 12-13, wherein the operations further comprise: receiving a query to execute on the portion of the database to access data in data in both the read-only partition and the writeable partition; and executing the query without using a join.
15. The system of any of clauses 12-14, wherein the method further comprises replicating the portion of the database including both the read-only partition and the writeable partition to another node.
16. The system of any of clauses 12-15, wherein the portion of the database comprises a database table, a plurality of documents from a document-based database, or a plurality of key-value pairs from a key-value database.
17. The system of any of clauses 12-16, wherein the read-only partition is associated with a partition identifier identifying the read-only partition as read-only.
18. The system of any of clauses 12-17, wherein the writeable partition is associated with a partition identifier identifying the writeable partition as writeable.
19. The system of any of clauses 12-18, wherein each portion of the database in the read-only partition is associated with metadata indicating that the portion of the database in the read-only partition is read-only.
20. The system of any of clauses 12-19, wherein each portion of the database in the writeable partition is associated with metadata indicating that each column is writeable.
21. The system of any of clauses 12-20, wherein the portion of the database comprises a database table, and adding the field to the portion of the database in the writeable partition further comprises adding a writeable column to the database table.
22. The system of any of clauses 12-21, wherein the method further comprises adding a second field to the portion of the database in the writeable partition, wherein the field is writeable only by a first user and the second field is writeable only by a second user.
23. In some embodiments, a computer-implemented method comprises: receiving a replica of a portion of a database; storing the replica of the portion of the database in a read-only partition; adding a field to the portion of the database in a writeable partition; and writing data to the added field.
24. The computer-implemented method of clause 23, wherein the replica of the portion of the database includes records received from a second node.
25. The computer-implemented method of any of clauses 23-24, wherein the method further comprises: receiving a query to execute on the portion of the database to access data in data in both the read-only partition and the writeable partition; and executing the query without using a join.
26. The computer-implemented method of any of clauses 23-25 wherein the method further comprises replicating the portion of the database including both the read-only partition and the writeable partition to another node.
27. The computer-implemented method of any of clauses 23-26, wherein the portion of the database comprises a database table, a plurality of documents from a document-based database, or a plurality of key-value pairs from a key-value database.
28. The computer-implemented method of any of clauses 23-27, wherein the read-only partition is associated with a partition identifier identifying the read-only partition as read-only.
29. The computer-implemented method of any of clauses 23-28, wherein the writeable partition is associated with a partition identifier identifying the writeable partition as writeable.
30. The computer-implemented method of any of clauses 23-29, wherein each portion of the database in the read-only partition is associated with metadata indicating that the portion of the database in the read-only partition is read-only.
31. The computer-implemented method of any of clauses 23-30, wherein each portion of the database in the writeable partition is associated with metadata indicating that each column is writeable.
32. The computer-implemented method of any of clauses 23-31, wherein the portion of the database comprises a database table, and adding the field to the portion of the database in the writeable partition further comprises adding a writeable column to the database table.
33. The computer-implemented method of any of clauses 23-32, wherein the method further comprises adding a second field to the portion of the database in the writeable partition, wherein the field is writeable only by a first user and the second field is writeable only by a second user.
34. In some embodiments, a database table comprises one or more first columns in a read-only partition; and one or more second columns in a writeable partition.
35. The database table of clause 34, wherein the one or more first columns include data replicated from a database table in another cluster.
36. The database table of any of clauses 34 or 35, wherein a first row in the database table includes data stored in the one or more second columns for the first row that is derived from data stored in the one or more first columns for the first row.
37. The database table of any one of clauses 34 to 36, wherein the database table is a structured query language (SQL) or a NoSQL table.
38. The database table of any one of clauses 34 to 37, wherein the read-only partition is associated with a partition identifier identifying the read-only partition as read-only.
39. The database table of any one of clauses 34 to 38, wherein the writeable partition is associated with a partition identifier identifying the writeable partition as writeable.
40. The database table of any one of clauses 34 to 37, wherein each of the one or more first columns are associated with metadata indicating that the one or more first columns are read-only.
41. The database table of any one of clauses 34 to 37 or 40, wherein each of the one or more second columns are associated with metadata indicating that the one or more second columns are writeable.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. One or more non-transitory computer-readable media storing program instructions that, when executed by one or more processors of a first node, cause the one or more processors to perform a method comprising:
receiving a replica of a portion of a database;
storing the replica of the portion of the database in a read-only partition;
adding a field to the portion of the database in a writeable partition; and
writing data to the added field.

2. The one or more non-transitory computer-readable media of claim 1, wherein the replica of the portion of the database includes records received from a second node.

3. The one or more non-transitory computer-readable media of claim 1 or 2, wherein the method further comprises:
receiving a query to execute on the portion of the database to access data in data in both the read-only partition and the writeable partition; and
executing the query without using a join.

4. The one or more non-transitory computer-readable media of any one of claims 1 to 3, wherein the method further comprises replicating the portion of the database including both the read-only partition and the writeable partition to another node.

5. The one or more non-transitory computer-readable media of any one of claims 1 to 4, wherein the portion of the database comprises a database table, a plurality of documents from a document-based database, or a plurality of key-value pairs from a key-value database.

6. The one or more non-transitory computer-readable media of any one of claims 1 to 5, wherein the read-only partition is associated with a partition identifier identifying the read-only partition as read-only.

7. The one or more non-transitory computer-readable media of any one of claim 1 to 6, wherein the writeable partition is associated with a partition identifier identifying the writeable partition as writeable.

8. The one or more non-transitory computer-readable media of any one of claims 1 to 5, wherein each portion of the database in the read-only partition is associated with metadata indicating that the portion of the database in the read-only partition is read-only.

9. The one or more non-transitory computer-readable media of any one of claims 1 to 5 or 7, wherein each portion of the database in the writeable partition is associated with metadata indicating that each portion is writeable.

10. The one or more non-transitory computer-readable media of any one of claims 1 to 9, wherein the portion of the database comprises a database table, and adding the field to the portion of the database in the writeable partition further comprises adding a writeable column to the database table.

11. The one or more non-transitory computer-readable media of any one of claims 1 to 10, wherein the method further comprises adding a second field to the portion of the database in the writeable partition, wherein the field is writeable only by a first user and the second field is writeable only by a second user.

12. A system comprising:
memory storing instructions; and
one or more processors coupled to the memory and, when executing the instructions, are configured to perform operations comprising:
receiving a replica of a portion of a database;
storing the replica of the portion of the database in a read-only partition;
adding a field to the portion of the database in a writeable partition; and
writing data to the added field.

13. A computer-implemented method comprising:
receiving a replica of a portion of a database;
storing the replica of the portion of the database in a read-only partition;
adding a field to the portion of the database in a writeable partition; and
writing data to the added field.

14. The computer-implemented method of claim 13, wherein the method further comprises:
receiving a query to execute on the portion of the database to access data in data in both the read-only partition and the writeable partition; and
executing the query without using a join.

15. The computer-implemented method of claim 13 or 14, wherein the portion of the database comprises a database table, and adding the field to the portion of the database in the writeable partition further comprises adding a writeable column to the database table.
